# EUROPEAN PATENT APPLICATION

(11) **EP 3 705 765 A1**
(43) Date of publication of application: **09.09.2020**
(21) Application number: 19160636.7
(22) Date of filing: 04.03.2019
(51) Int. Cl.: F16L 3/13, F16L 3/23, F16L 3/237, G01K 1/14, H02G 3/32, F16B 2/24, F16B 7/04

(54) **CLAMP**

(71) Applicant: EDF Luminus NV, 1000 Brussel (BE)
(72) Inventor: DIRIX, Eric, 3500 Hasselt (BE); DIRIX, Pieter, 3010 Leuven (BE)
(74) Representative: IPLodge bv

(57) **Abstract**

Clamp for arranging a first elongated member on the outside of and along a section of a second elongated member and preferably in direct contact therewith, said clamp comprising a first clamping arm portion (2a) and a second clamping arm portion (2b) located adjacent to one another, each clamping arm portion comprising a proximal end (3a, 3b) and a distal end (6a, 6b), the first clamping arm portion connected at its proximal end to a first end of a central saddle portion (5), and the second clamping arm portion connected at its proximal end to a second end of the central saddle portion, thereby creating a central opening (7) for receiving said second elongated member, wherein the distal ends of the first and second clamping arm portions define an insertion opening (8) which is smaller than the central opening, wherein said clamping arm portions are movable apart by elastic deformation to open up the insertion opening, and wherein said central saddle portion comprises an form-fitting portion which is essentially convex, for holding said first elongated member, said form-fitting portion being delimited by at least a first concave holding recess (10a, 10b) near said first end of the central saddle portion.

## Description

### Field of the Invention

The present invention relates to a clamp for arranging elongated members such as pipes, tubes, cables and ducts on a second elongated member. We refer to the technical field F16B 2/20 according to the CPC.

### Background

Clamps for fastening cables, pipes or ducts to each other are known in the state of the art.

EP 0 687 844 B1 discloses a clip for fixing pipes or cables to a fixed point, the clip consisting of two clamps connected together at one side and each exhibiting a holder on the opposite side, the holders exhibiting a hole for accommodating a clamping screw.
GB 2478772 A discloses a pipe clip assembly with first pipe clip adapted to be secured to a first pipe and a plurality of second pipe clips adapted to hold second pipes. The first pipe clip may be provided with fastening means for securing the first pipe clip around the first pipe.
US 8 245 733 B2 discloses a clip of moulded plastics material for fitting onto a pipe or duct, having an open ring with a C-shape with facing arms that can be sprung apart to resiliently fit the clip onto the pipe. The clip furthermore carries at least one outwardly-extending member for securing cables and the like to the clip or for securing the clip to a support.

Solutions proposed in the prior art often require the clamp or clip to completely contour the pipe or duct on which an element is arranged, which is not always possible when a pipe or duct is difficult to access. Furthermore, such solutions may require the use of tightening screws or other means for fastening the clip to the pipe or duct.

Furthermore, the clamps of the prior art do not seem to allow direct and/or close contact between the two elongated members which are being clamped.

The object of the invention is to provide a clamp that can arrange or fasten a first elongated object to a second elongated object, wherein said clamp requires less time to arrange or to remove he first elongated object to the second elongated object, and wherein the elongated objects can be clamped in direct contact.

### Summary of the Invention

The present invention relates to a clamp according to claim 1. Hereby the two clamping arm portions are movable apart by elastic deformation, thereby allowing insertion of the first elongated member via the insertion opening and subsequently the central opening to fit into the convex form-fitting portion of the central saddle portion, and allowing subsequent insertion of the second elongated member via the insertion opening into the central opening. Once the second elongated member has been inserted into the central opening, the distal ends of the clamping arms move elastically to make the insertion opening smaller again, thereby exerting forces on the sides of the second elongated member which hold the second elongated member in place and in contact with the first elongated member.

The convex form-fitting portion is essentially capable of receiving and well supporting the first elongated member. The concave holding recess, and preferably the two concave holding recesses on either side of the convex form-fitting portion, restrains the first elongated member from moving sideways, i.e. in the direction of the either end of the central saddle portion. The concave recess also can help in ensuring contact between the first and second elongated member. Such direct contact is advantageous, e.g. when the first elongated member is a temperature sensor that has to measure an indication of temperature of the fluid in the second elongated member.

The convex form-fitting portion of the central saddle portion preferably comprises a cylindrical mantle portion to allow a close fit of a cylindrical first elongated member.

The clamp according to the invention allows for arranging and removing said first member in a straightforward and rapid way. The clamp does not require welding, does not require any fastening means such as screws, and does not have to contour the pipe, i.e. access to the second elongated member, e.g. a pipe, is only required on a single side of the second elongated member.

Clamps in accordance of the present invention can be custom-made with certain sizes and proportions corresponding to the sizes and proportions of the two elongated members which are to be clamped together in direct contact, or clamps in accordance of the present invention can be made with standardized sizes and proportions to allow elongated members with standardized sizes and proportions to be clamped together in direct contact.

The present invention further relates to a method for clamping two elongated members to each other, according to claim XXX, and to the use of a clamp according to claim XXX.

More preferred embodiments of the clamp, the method and the use of the clamp are disclosed in the dependent claims and further in this document.

### Brief Description of the Figures

These and other features and advantages of embodiments of the present invention will now be described in more detail with reference to the accompanying drawings, in which:
- Figure 1 schematically illustrates a clamp according to embodiments of the invention in a perspective view.
- Figure 2 shows a frontal view of the clamp according to the invention.
- Figure 3 shows a sideways view of the clamp depicted in figure 2.

### Detailed Description of Embodiments

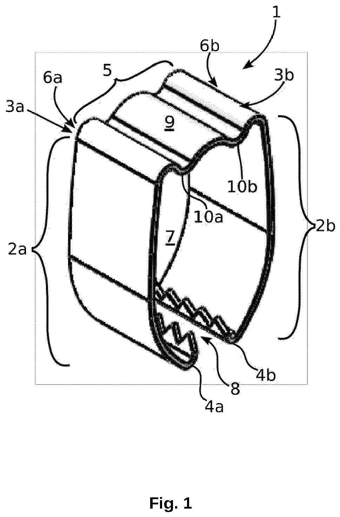

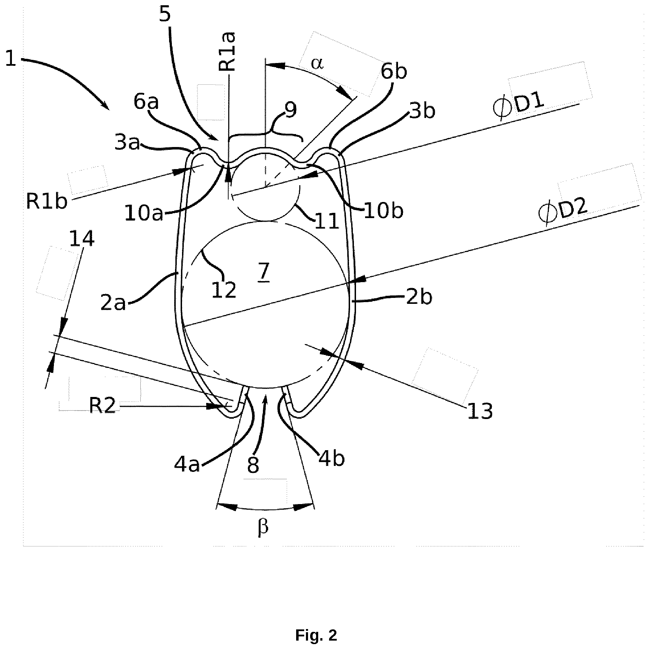

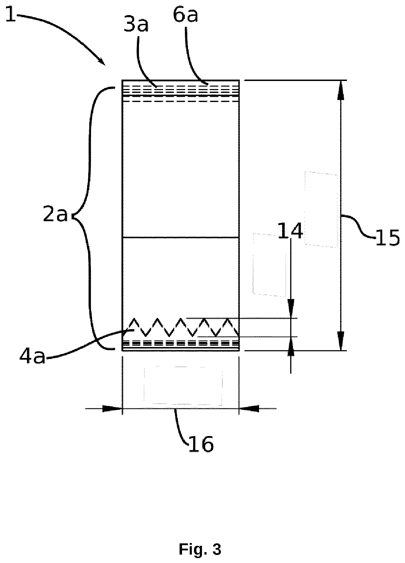

Figures 1-3 schematically illustrate a clamp for arranging a first elongated member (11) on the outside of and along a section of a second elongated member (12), and preferably in direct contact therewith, according to embodiments of the invention.

The clamp (1) comprises a first clamping arm portion (2a) and a second clamping arm portion (2b) located adjacent to one another, each clamping arm portion comprising a proximal end (3a, 3b) and a distal end (4a, 4b),
the first clamping arm portion (2a) connected at its proximal end (3a) to a first end (6a) of a central saddle portion (5), and the second clamping arm portion (2b) connected at its proximal end (3b) to a second end (6b) of the central saddle portion (5), thereby creating a central opening (7) for receiving said second elongated member,
wherein the distal ends (4a, 4b) of the first (2a) and second (2b) clamping arm portions define an insertion opening (8) which is smaller than the central opening (7),
wherein said clamping arm portions are movable apart by elastic deformation to open up the insertion opening, and
wherein said central saddle portion (5) comprises an form-fitting portion (9) which is essentially convex, for holding said first elongated member (11),
said form-fitting portion (9) being delimited by at least a first concave holding recess (10a) near said first end (6a) of the central saddle portion and preferably said form-fitting portion (9) being delimited by a second concave holding recess (10b) near said second end (6b) of the central saddle portion.

Preferably the clamp, and more preferably the first and/or second clamping arm portion of the clamp, comprises a thickness (13) of between 0.1mm and 2mm, more preferably between 0.2mm and 1mm, yet more preferably between 0.3mm and 0.8mm, still more preferably between 0.4mm and 0.6mm, such as 0.4mm, 0.5mm, 0.6mm or any value therebetween, most preferably about 0.5mm.

In a preferred embodiment, the distal end of the first clamping arm portion and/or the distal end of the second clamping arm portion, preferably the distal ends of both clamping arm portions, comprise an inward turn towards said central opening to better fixate the second elongated member in the central opening. Preferably said inward turn comprises a curvature radius (R2) of between 0.1mm and 2mm, more preferably between 0.2mm and 1mm, yet more preferably between 0.3mm and 0.8mm, still more preferably between 0.4mm and 0.6mm, such as 0.4mm, 0.5mm, 0.6mm or any value therebetween, most preferably about 0.5mm.

Preferably the inward turn is such that the insertion opening comprises an opening angle β, which is preferably between 10° and 60°, more preferably between 15° and 55°, still more preferably between 20° and 50°, yet more preferably between 23° and 45°, even more preferably between 25° and 40°, such as 25°, 26°, 27°, 28°, 29°, 30°, 31°, 32°, 33°, 34°, 35°, 36°, 37°, 38°, 39°, 40° or any value there between, most preferably about 30°.

More preferably the distal end of the first clamping arm portion and/or the distal end of the second clamping arm portion, preferably the distal ends of both clamping arm portions, comprise teeth for contacting and at least partially fixing said second elongated member. Preferably the teeth comprise a teeth height (14) of between 0.1mm and 10mm, more preferably between 0.3mm and 5mm, yet more preferably between 0.8mm and 3mm, still more preferably between 1.2mm and 2.0mm, such as 1.2mm, 1.3mm, 1.4mm, 1.5mm, 1.6mm, 1.7mm, 1.8mm, 1.9mm, 2.0mm or any value therebetween, most preferably about 1.5mm or 1.6mm.

Preferably the clamp comprises a height (15) of between 4mm and 120mm, more preferably between 6mm and 100mm, still more preferably between 8mm and 80mm, yet more preferably between 10mm and 60mm, even more preferably between 12mm and 40mm, still even more preferably between 14mm and 30mm, such as 14mm, 15mm, 16mm, 17mm, 18mm, 19mm, 20mm, 21mm, 22mm, 23mm, 24mm, 25mm, 26mm, 27mm, 28mm, 29mm, 30mm or any value therebetween, most preferably about 23mm or 24mm.

Preferably the clamp comprises a length (16) of between 2mm and 50mm, more preferably between 4mm and 40mm, even more preferably between 6mm and 30mm, yet more preferably between 7mm and 20mm, such as 8mm, 9mm, 10mm, 11mm, 12mm, 13mm, 14mm, 15mm, 16mm, 17mm, 18mm, 19mm, 20mm, most preferably about 10mm.

In a preferred embodiment, the clamp is essentially a one-piece clamp. This improves the structural properties, in particular the movability of the clamping arm portions. It also allows easier manufacturing of the clamp, e.g. manufacturing by molding.

Preferably, the clamp is essentially made from a metal such as iron, aluminium, cupper, zinc, or from an alloy, such as an iron alloy (e.g. steel or stainless steel), an aluminium alloy, a cupper alloy, a zinc alloy, most preferably made from stainless steel. This is particularly preferred for one-piece clamps.

In another embodiment, the clamp is essentially made from a polymer material.

Advantageously, the clamp is made from a thermally conducting material, more preferably a thermally conducting alloy, in particular when the clamp is used to clamp an elongated temperature sensor onto another elongated member.

In a preferred embodiment, the clamp comprises a set of corrugations on an inner surface of the form-fitting portion to restrain rotation of the first elongated member around a central axis of the elongated member.

The form-fitting portion (9) preferably comprises a cylindrical portion over an angle 2α, whereby α is preferably at least 15°, more preferably at least 30°, still more preferably at least 40°, yet more preferably 45° or more.

The first concave recess (10a) and/or the second concave recess (10b) preferably comprise a curvature radius (R1a) of between 0.1mm and 10mm, more preferably between 0.3mm and 3mm, yet more preferably between 0.5mm and 2mm, still more preferably between 0.8mm and 1.5mm, such as 0.8mm, 0.9mm, 1.0mm, 1.1mm, 1.2mm, 1.3mm, 1.4mm, 1.5mm or any value therebetween, most preferably about 1.0mm.

The first concave recess (10a) is preferably connected with the proximal end (3a) of the first clamping arm portion (2a) in a curved shape comprising a curvature radius (R1b) of between 0.1mm and 10mm, more preferably between 0.3mm and 3mm, yet more preferably between 0.5mm and 2mm, still more preferably between 0.8mm and 1.5mm, such as 0.8mm, 0.9mm, 1.0mm, 1.1mm, 1.2mm, 1.3mm, 1.4mm, 1.5mm or any value therebetween, most preferably about 1.0mm.

Alternatively or additionally, the second concave recess (10b) is preferably connected with the proximal end (3b) of the first clamping arm portion (2b) in a curved shape comprising a curvature radius of between 0.1mm and 10mm, more preferably between 0.3mm and 3mm, yet more preferably between 0.5mm and 2mm, still more preferably between 0.8mm and 1.5mm, such as 0.8mm, 0.9mm, 1.0mm, 1.1mm, 1.2mm, 1.3mm, 1.4mm, 1.5mm or any value therebetween, most preferably about 1.0mm.

Preferably the curvature radii of the connections of both proximal ends of the clamping arm portions with the concave recesses at the respective ends of the central saddle portion are essentially equal.

Two elongated members can be clamped together. Hereby a first elongated member can be arranged on the outside of and along a section of a second elongated member and preferably in direct contact therewith, by:
- inserting the first elongated member into a clamp according to the present invention;
- inserting the second elongated member via the insertion opening into the central opening of said clamp such that the clamping arm portions of the clamp exert a fixation force on the second elongating member.

Preferably, hereby said first elongated member and said second elongated member are in direct contact.

Preferably, said first elongated member is a pipe, cable, duct and/or wherein said first elongated member comprises a sensor. Alternatively or additionally, said second elongated member is a pipe, cable or a duct.

In a preferred embodiment, the first elongated member is essentially cylindrical and comprises a diameter (D1) of between 1mm and 30mm, more preferably between 2mm and 20mm, even more preferably between 3mm and 15mm, still more preferably between 4mm and 10mm, yet more preferably between 5 mm and 7mm, most preferably between 5.5mm and 6.5mm, such as 5.5mm, 5.6mm, 5.7mm, 5.8mm, 5.9m, 6.0mm, 6.1mm, 6.2mm, 6.3mm, 6.4mm, 6.5mm or any value therebetween. The form-fitting portion of the clamp hereby preferably comprises a matching curvature radius over an angle 2α.

In a preferred embodiment, the second elongated member is essentially cylindrical and comprises a diameter (D2) of between 3mm and 90mm, more preferably between 6mm and 60mm, even more preferably between 9mm and 45mm, still more preferably between 11mm and 30mm, yet more preferably between 13 mm and 20mm, most preferably between 14mm and 16mm, such as 14.1mm, 14.2mm, 14.3mm, 14.4mm, 14.5m, 14.6mm, 14.7mm, 14.8mm, 14.9mm, 15.0mm, 15.1mm, 15.2mm, 15.3mm, 15.4mm, 15.4mm, 15.5mm, 15.5mm, 15.6mm, 15.7mm, 15.8mm, 15.9mm, 16.0mm or any value therebetween. The central opening (7) of the clamp hereby preferably comprises a size which preferably is smaller than or equal to said diameter (D2).

A preferred use of the clamp according to the invention, is for clamping a sensor to a pipe, preferably wherein said sensor is a temperature sensor, more preferably whereby said sensor is clamped in thermal contact with said pipe. Hereby, preferably, a method in accordance with the present invention is used.

Hence, the present invention also relates to a method for measuring the temperature of a fluid in a pipe, whereby an elongated temperature sensor is clamped onto the pipe using a clamp according to the present invention.

## Claims

1. A clamp for arranging a first elongated member on the outside of and along a section of a second elongated member and preferably in direct contact therewith,
said clamp comprising a first clamping arm portion and a second clamping arm portion located adjacent to one another, each clamping arm portion comprising a proximal end and a distal end,
the first clamping arm portion connected at its proximal end to a first end of a central saddle portion, and the second clamping arm portion connected at its proximal end to a second end of the central saddle portion, thereby creating a central opening for receiving said second elongated member,
wherein the distal ends of the first and second clamping arm portions define an insertion opening which is smaller than the central opening,
wherein said clamping arm portions are movable apart by elastic deformation to open up the insertion opening, and
wherein said central saddle portion comprises an form-fitting portion which is essentially convex, for holding said first elongated member,
said form-fitting portion being delimited by at least a first concave holding recess near said first end of the central saddle portion and preferably said form-fitting portion being delimited by a second concave holding recess near said second end of the central saddle portion.

2. The clamp according to claim 1, wherein the distal end of the first clamping arm portion and/or the distal end of the second clamping arm portion, preferably the distal ends of both clamping arm portions, comprise an inward turn towards said central opening.

3. The clamp according to claims 1 or 2, wherein the distal end of the first clamping arm portion and/or the distal end of the second clamping arm portion, preferably the distal ends of both clamping arm portions, comprise teeth for contacting and at least partially fixing said second elongated member.

4. The clamp according to any of claims 1 to 3, wherein the clamp is essentially a one-piece clamp.

5. The clamp according to any of claims 1 to 4, wherein the clamp is essentially made from a metal or an alloy.

6. The clamp according to claim 5, wherein the clamp is essentially made from stainless steel.

7. The clamp according to any of the claims 1 to 6, comprising a set of corrugations on an inner surface of the form-fitting portion to restrain rotation of the first elongated member around a central axis of the elongated member.

8. Method for arranging a first elongated member on the outside of and along a section of a second elongated member and preferably in direct contact therewith, comprising the steps of:
- inserting the first elongated member into a clamp according to any of claims 1 to 7;
- inserting the second elongated member via the insertion opening into the central opening of said clamp such that the clamping arm portions of the clamp exert a fixation force on the second elongating member.

9. The method according to claim 8, wherein, when the clamp is arranging said first elongated member onto said second elongated member, said first elongated member and said second elongated member are in direct contact.

10. The method according to claim 8 or 9, wherein said first elongated member is a pipe, cable, duct and/or wherein said first elongated member comprises a sensor.

11. The method according to any of claims 8 to 10, wherein said second elongated member is a pipe, cable or a duct.

12. Use of a clamp according to any of claims 1 to 7 to clamp a sensor to a pipe, preferably wherein said sensor is a temperature sensor, more preferably whereby said sensor is clamped in thermal contact with said pipe, and preferably using a method according to any of claims 8 to 11.
